# NEUE EUROPÄISCHE PATENTSCHRIFT

(11) **EP 0 792 223 B2**
(45) Veröffentlichungstag und Bekanntmachung des Hinweises auf die Entscheidung über den Einspruch: **13.10.2004**
(45) Hinweis auf die Patenterteilung: 26.09.2001
(21) Anmeldenummer: 95935831.8
(22) Anmeldetag: 03.11.1995
(51) Int. Cl.: B60R 25/04

(54) **STRUKTURELLER DIEBSTAHLSCHUTZ FÜR KRAFTFAHRZEUGE**
STRUCTURAL THEFT-PROTECTION DEVICE FOR MOTOR VEHICLES
SYSTEME ANTIVOL STRUCTURAL POUR AUTOMOBILES

(30) Priorität: 25.11.1994 DE 4442103
(43) Veröffentlichungstag der Anmeldung: 03.09.1997
(73) Patentinhaber: ROBERT BOSCH GMBH, 70442 Stuttgart (DE)
(72) Erfinder: WEIGL, Andreas, D-76351 Linkenheim-Hochstetten (DE); HERRMANN, Bernd, D-74343 Sachsenheim (DE); KÖLLE, Ulrich, D-71701 Schwieberdingen (DE); RANDOLL, Helmut, D-71665 Vaihingen (DE); HUGEL, Robert, D-76199 Karlsruhe (DE)
(86) Internationale Anmeldenummer: PCT/DE1995/001514
(87) Internationale Veröffentlichungsnummer: WO 1996/016845

(56) Entgegenhaltungen:
- EP-A- 0 574 230
- EP-A- 0 680 859
- WO-A-84/03785
- WO-A-93/17895
- WO-A-95/13205
- DE-A- 2 911 160
- DE-A- 3 908 029
- DE-A- 4 243 482
- DE-A- 4 326 514
- DE-C- 4 243 415
- GB-A- 2 266 747
- NL-A- 9 202 255
- US-A- 4 302 747
- US-A- 4 805 722
- US-A- 5 224 566
- US-A- 5 276 728
- PATENT ABSTRACTS OF JAPAN vol. 010 no. 353 (M-539) ,28.November 1986 & JP,A,61 150853 (NISSAN MOTOR CO LTD) 9.Juli 1986,

## Beschreibung

### Stand der Technik

Die Erfindung betrifft einen Strukturellen Diebstahlschutz für Kraftfahrzeuge. Um einer steigenden Anzahl von Kraftfahrzeugdiebstählen zu begegnen, werden vor allem in Neufahrzeugen zunehmend Wegfahrsperren eingesetzt. Deren Arbeitsweise beruht darauf, die Funktion wenigstens eines für den Fahrzeugbetrieb wesentlichen Motorsteuergerätes nur freizugeben, wenn ein der Wegfahrsperre von außen einzugebender Code mit einem in der Wegfahrsperre vorab gespeicherten übereinstimmt. Einrichtungen dieser Art gewährleisten ein hohes Maß an Sicherheit gegen Diebstahlversuche, sofern das gesicherte Fahrzeug abgestellt und der potentielle Dieb nicht im Besitz der regulären Inbetriebnahmemittel ist. In jüngster Zeit ist allerdings eine Tendenz dahin zu beobachten, daß Fahrzeuge nicht mehr durch irreguläre Inbetriebnahme, sondern durch sogenanntes "car-jacking" entwendet werden. Dabei erzwingt ein Dieb gewaltsam die Übergabe der regulären Inbetriebnahmemittel vom Fahrzeugbenutzer, und kann dadurch unbeschränkt über das Fahrzeug verfügen. Eine car-jacking zumindest erschwerende Fahrzeugsicherungsanordnung ist aus der US-PS 4 302 747 bekannt. Ein gemäß dem Vorschlag dieser Schrift gesichertes Fahrzeug wird nach Ablauf einer vorbestimmten Zeit ab dem Motorstart stillgesetzt, sofern nicht ein versteckter Schalter betätigt wird, welcher dieses verhindert. Auch diese bekannte Anordnung verliert aber ihre Schutzwirkung, insbesondere gegenüber car-jacking, wenn ein Dieb vom Vorhandensein eines entsprechenden Schalters ausgeht - was bei größerer Verbreiterung derartiger Schutzeinrichtungen regelmäßig der Fall sein wird - und den Benutzer zur vollständigen Erläuterung aller Sicherheitseinrichtungen auffordert. Eine die Möglichkeit der drahtlosen Kommunikation zwischen einem Fahrzeug und einer ortsfesten Überwachungsstation nutzende Sicherungsanordnung ist aus der DE-OS 42 43 482 bekannt. Dabei wird mit Hilfe von zwischen dem gesicherten Fahrzeug und der ortsfesten Überwachungsstation ausgetauschten Signalen geprüft, ob eine innerhalb des Fahrzeuges vorgesehene Berechtigungsprüfkommunikation zwischen einer fahrzeugseitigen Sendeeinrichtung und einer vom Benutzer gehandhabten, in den Zündschlüssel integrierten Sendeeinrichtung ordnungsgemäß erfolgt. Tritt in der Berechtigungsprüfkommunikation ein Fehler auf, erfolgt sie insbesondere etwa gar nicht, weil das Fahrzeug kurzgeschlossen wurde, wird dies in der ortsfesten Überwachungsstation erkannt. Mit Hilfe von Identifizierungsdaten, welche der Überwachungsstation ohne Wissen des unrechtmäßigen Benutzers übermittelt werden, kann das entwendete Fahrzeug geortet werden. Auch diese Anordnung ist in Fällen, wo sich der Dieb in Besitz der regulären Inbetriebnahmemittel, in diesem Fall des Zündschlüssels, bringt, wirkungslos.

Aus der US-A- 4 805 722 ist ein Freigabesystem für ein Kraftfahrzeug bekannt. Zur Entriegelung der Nutzung eines Kraftfahrzeugs ist eine Magnetkarte vorgesehen. Die Entriegelungsinformation wird mit einer lokalen Magnetkartenschreib- und Lesestation auf die Karte geschrieben. Diese Freigabeinformation ist permanent auf der Magnetkarte vorhanden und wird nicht in eine im Fahrzeug angeordnete Steuerungseinrichtung übernommen.

Aus der GB-A-22 66 747 ist eine Vorrichtung bekannt, bei der eine Freigabeinformation für ein Kraftfahrzeug über ein Telefonnetz in das Fahrzeug übertragen wird. Ausgelöst wird diese Übertragung durch den Benutzer.

Aus der EP-A-0 680 859 die ein Dokument gemäß Art 54(3) und (4) EPÜ darstellt, ist ein struktureller Diebstahlschutz für Kraftfahrzeuge mit
einer im Fahrzeug angeordneten Verriegelungssteuereinrichtung (30) zur Freischaltung eines Motorsteuergerätes (31),
einer mit der Verriegelungssteuereinrichtung verbundenen Sende-Empfangseinrichtung (21),
einer mit der Verriegelungssteuereinrichtung (30) verbundenen Einrichtung (32) zur Erfassung einer Fahrzeugnutzungskenngröße (t, S), sowie mit mehreren ortsfesten, nicht dem Fahrzeug zugehörigen Sende-Empfangsstationen (11) bekannt, wobei
die Verriegelungssteuereinrichtung (30) über die fahrzeugeigene Sende-Empfangseinrichtung (21) von einer ortsfesten Sende-Empfangsstation (11) jeweils die Zusendung einer Neufreigabeinformation anfordert, wenn die erfaßte Fahrzeugnutzungskenngröße (t, S) einen vorgegebenen Grenzwert erreicht, und sie die Nutzbarkeit des Fahrzeuges beschränkt, wenn eine Neufreigabeinformation nicht eingeht, und
eine Freischaltung des Motorsteuergerätes (31 ) nur erfolgt, wenn sich der Benutzer mit Hilfe einer Legitimationseinrichtung (33) zusätzlich legitimiert hat, die Freigabeinformation Maximalwerte der Fahrzeugnutzungskenngrößen zur Definition eines Aktionsbereiches beinhaltet, die erfaßte Fahrzeugnutzungskenngröße die aktuelle Position des Fahrzeuges ist und die Freigabeinformation Angaben über den Aktionsbereich enthält.

Der Erfindung liegt die Aufgabe zugrunde, eine weitere Sicherungsanordnung für Fahrzeuge anzugeben, welche die unrechtmäßige Inbesitznahme eines Fahrzeuges auch dann verhindert, wenn ein potentieller Dieb sich in Besitz der reguären Inbetriebnahmemittel gebracht hat.

Diese Aufgabe wird gelöst durch einen Strukturellen Diebstahlschutz mit den Merkmalen des Anspruchs 1. Erfindungsgemäß ausgerüstete Fahrzeuge bedürfen der regelmäßigen Erneuerung der Betriebsfreigabe durch Zuführung einer Freigabeinformation. Durch Sperren der Abgabe dieser Freigabeinformationen kann der Weiterbetrieb eines Fahrzeuges in bequemer Weise verhindert werden. Die Freigabeinformation wirkt so wie ein notwendiges Betriebsmittel, das im Falle einer unrechtmäßigen Inbetriebnahme nicht mehr zugeführt wird. Dadurch ist die Entwendung eines Fahrzeuges auch dann uninteressant, wenn ein Dieb im Besitz der rechtmäßigen Inbetriebnahmemittel ist und Kenntnis vom Aufbau der Sicherungsanordnung hat.

Eine fahrzeugseitige Codeerfassungsvorrichtung ist als Einrichtung zum Empfang von Funksignalen, die ortsfeste Codeübernahme-Ausgabevorrichtung als Funksignalsende-Empfangseinrichtung ausgebildet. Die regelmäßige Erneuerung der Freigabeinformation erfolgt dabei drahtlos. Die Codeerfassungseinrichtung ist auch zur Abgabe von Signalen geeignet, mittels derer sie die Freigabeinformationen jeweils anfordert.

In einfacher Weise wird als Fahrzeugnutzungskenngröße zur Festlegung des jeweils nach Eingang einer Freigabeinformation geltenden Aktionsbereiches die Betriebszeit oder die Wegstrecke herangezogen.

Gemäß einer anderen vorteilhaften Ausgestaltungwird als Fahrzeugnutzungskenngröße diejeweilige Fahrzeugposition erfaßt und die erfaßte Position mit einem zuvor als Freigabeinformation definierten Aktionsbereich verglichen.

Zweckmäßig ist ferner, das Fahrzeug bei Ausbleiben einer Freigabeinformation und bei Verlassen des Aktionsbereiches schrittweise stillzusetzen, indem zum Beispiel zunächst die Höchstgeschwindigkeit begrenzt wird.

Anhand der Zeichnung werden nachfolgend Ausführungsbeispiele der Erfindung näher erläutert.

### Zeichnung

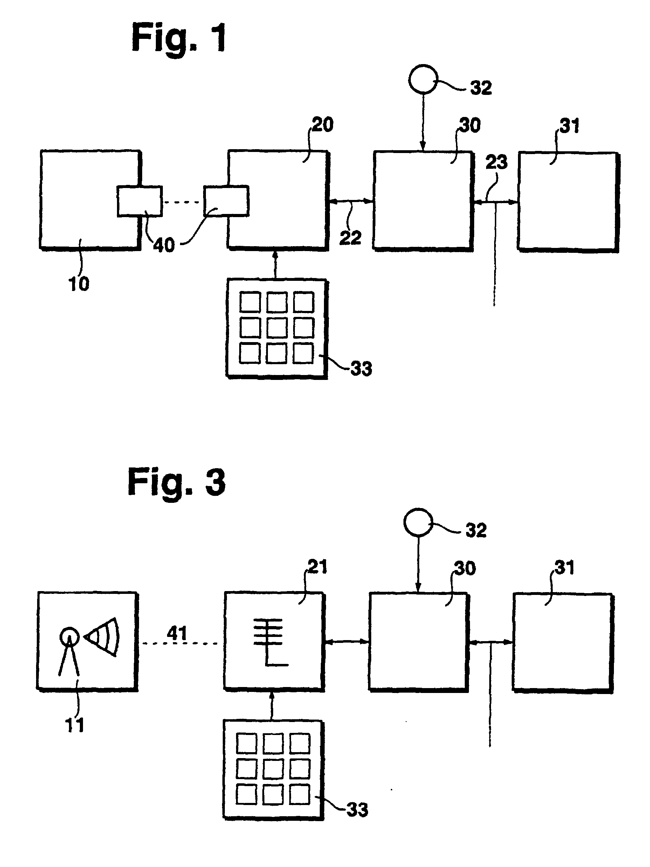

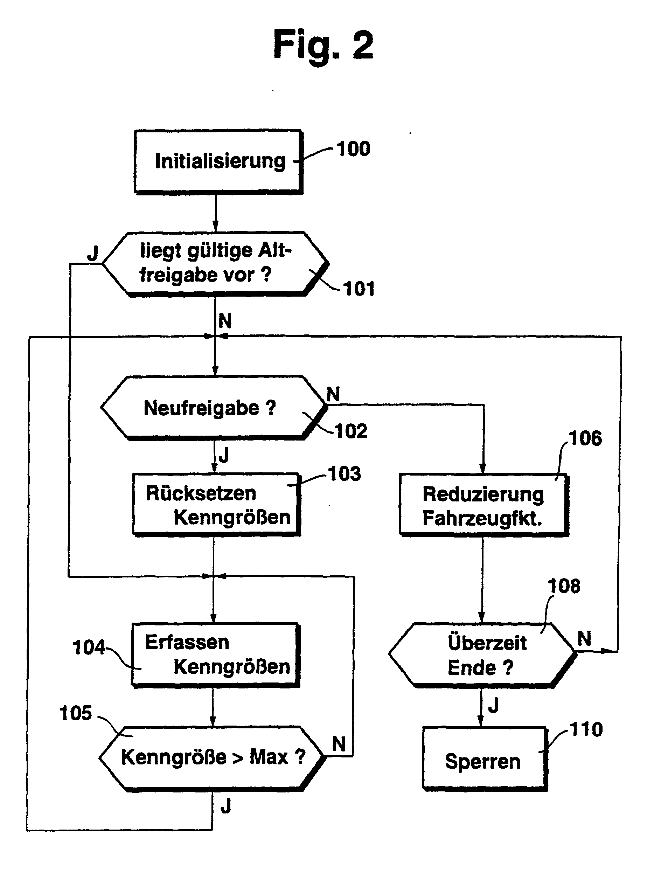

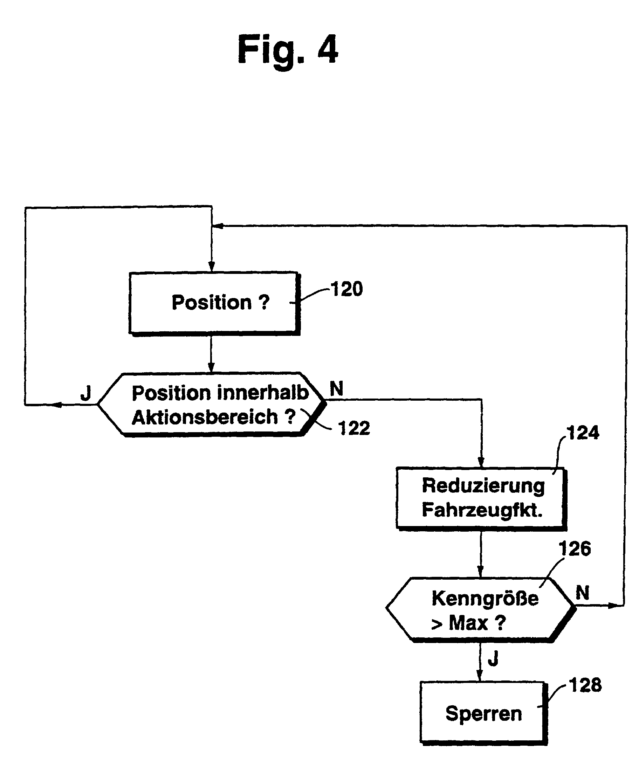

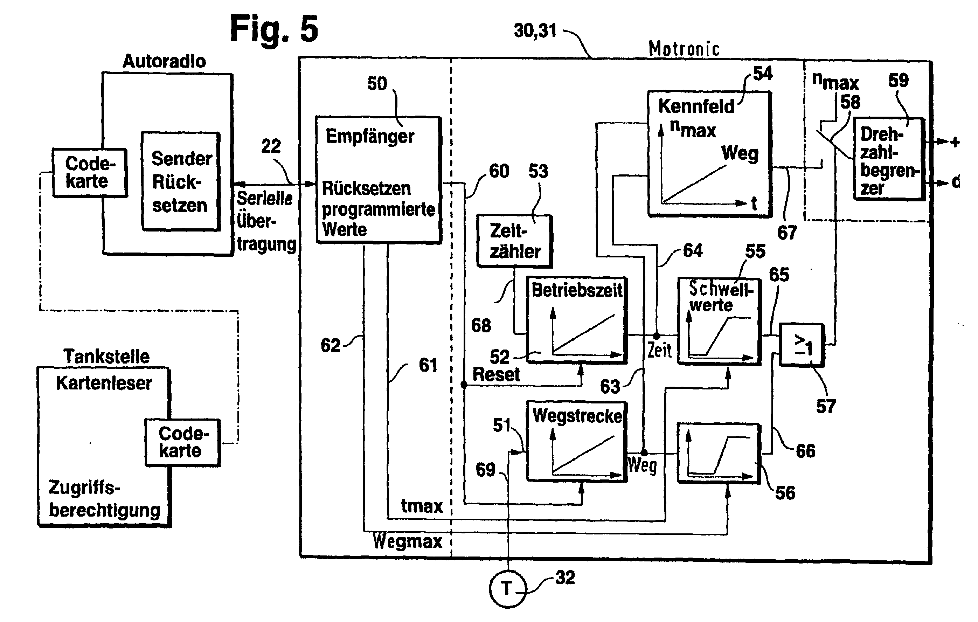

Es zeigen Figur 1 eine mittels einer Chipkarte arbeitende Sicherheitsanordnung, Figur 2 eine mittels Funksignalen arbeitenden Sicherungsanordnung, Figur 3 ein Flußdiagramm einer ersten Arbeitsweise, Figur 4 ein Flußdiagramm einer zweiten Arbeitsweise, Figur 5 eine Realisierung der Verriegelungsfunktion. Die Figuren 1, 2 und 5 gehören soweit sie eine Freigabe ausschließlich über eine Magnet-oder Chipkarte Betrellen, nicht zur Erfindung.

### Beschreibung der Ausführungsbeispiele

Die in Figur 1 dargestellte Ausführungsform beruht auf der Verwendung einer beschreibbaren Magnet- bzw. Chipkarte 40. Zum Lesen der Chipkarte 40 weist sie fahrzeugseitig einen Kartenleser 20 auf. Dabei kann es sich sowohl um eine im Fahrzeug ohnehin vorhandene Kartenleseeinrichtung, wie sie etwa zunehmend zur Absicherung von Autoradios eingesetzt werden, als auch um ein gesondertes Gerät handeln. Mit dem Kartenleser 20 über eine zweckmäßig serielle Übertragungsstrecke verbunden ist eine Verriegelungssteuereinrichtung 30. Sie kontrolliert die Freischaltung bzw. Verriegelung eines über eine Verbindung 23 nachgeschalteten Motorsteuergerätes 31. Bei dem Motorsteuergerät 31 kann es sich um jedes beliebige in einem Fahrzeug vorhandene Steuergerät handeln, dessen Verriegelung einen Weiterbetrieb bzw. Neustart des Fahrzeuges unmöglich macht. Auch können über die Verbindung 23 mehrere Steuergeräte gleichzeitig mit der Verriegelungssteuereinrichtung 30 verbunden sein. Zur Absicherung der Zusammengehörigkeit von Kartenleser 20 und Verriegelungssteuereinheit 30 kann zusätzlich eine Legitimationseinrichtung 33 vorgesehen sein, beispielsweise, wie in Figur 1 angedeutet, in Form einer Tastatur. Über sie ordnet ein Benutzer dem Kartenleser 20 einen Berechtigungscode zu, welcher der Verriegelungssteuereinrichtung 30 zugeführt und von dieser geprüft wird. Statt einer Tastatur kann die Legitimationseinrichtung 33 selbstverständlich in beliebiger anderer Weise realisiert sein, beispielsweise in Form eines Infrarotsenders. Auch kann die Legitimationseinrichtung 33 statt auf den Kartenleser 20 direkt auf die Verriegelungssteuereinrichtung 30 wirken. Weiterhin mit der Verriegelungssteuereinheit 30 verbunden ist eine Einrichtung 32 zur Erfassung einer Fahrzeugnutzungskenngröße. Erfaßte Größen sind vorzugsweise die zurückgelegte Wegstrecke, die Betriebszeit und/oder die Fahrzeugposition. Weiterer Bestandteil der Sicherungsanordnung sind ferner mehrere ortsfeste, nicht dem gesicherten Fahrzeug zugehörige Karten-/Lese-/Schreibstationen 10, welche die Codekarte 40 sowohl lesen als auch mit neuen Informationen beschreiben können. Vorzugsweise befinden sich die Kartenlese-/Schreibstationen 10 an Tankstellen. Eine gesonderte Kartenlese-/Schreibstation 10, welche nur auf die zu einem speziellen Fahrzeug gehörenden Karten Zugriff hat, befindet sich zweckmäßig ferner beim Fahrzeugeigentümer. Als Codekarten 40 kommen übliche Magnet- bzw. Chipkarten im Kreditkartenformat zur Verwendung. Zusätzlich weisen sie einen beschreibbaren Bereich auf. Zweckmäßig dient die Codekarte 40 gleichzeitig als Tank-Kreditkarte.

Unter Bezugnahme auf Figur 2 wird nachfolgend die Funktionsweise der in Figur 1 wiedergegebenen Anordnung beschrieben. Um das Fahrzeug in Betrieb zu nehmen, ist zunächst eine Initialisierung, Schritt 100 erforderlich. Hierbei führt der Benutzer die Codekarte 40 dem Kartenleser 20 zu. Zugleich legitimiert er sich durch Eingabe eines Codes über das Tastenfeld 33. Akzeptiert die Verriegelungssteuereinrichtung 30 den über das Tastenfeld 33 eingegebenen Code als gültig, liest der Kartenleser 20 die mit der Codekarte 40 zugeführten Informationen und übermittelt sie der Verriegelungssteuereinrichtung 30. Diese prüft daraufhin, ob ihr eine gültige Altfreigabeinformation vorliegt, Schritt 101. Sie liegt stets vor, wenn die erfaßte Fahrzeugnutzungskenngröße einen Maximalwert noch nicht überschritten hat und kann beispielsweise in Form einer Angabe die noch regulär zulässige Restfahrzeugbetriebszeit realisiert sein. Die Altfreigabeinformation befindet sich in einem hierfür vorhandenen Speicher im Fahrzeug, kann aber auch jeweils über die Codekarte 40 zugeführt werden.

Ist eine gültige Altfreigabeinformation nicht vorhanden, prüft die Verriegelungssteuereinrichtung 30 anschließend, Schritt 102, ob auf der Codekarte 40 eine Neufreigabeinformation vorhanden ist. Trifft dies zu, erzeugt sie eine Altfreigabeinformation und schreibt sie in den in dem hierfür vorhandenen Speicher oder alternativ auf die Codekarte 40. Dabei löscht sie die Neufreigabeinformation auf der Codekarte 40. Weiterhin setzt sie, Schritt 103, die für die Fahrzeugnutzungskenngrößen erfaßten Werte auf deren vorfestgelegte Ausgangswerte zurück. Dient als Fahrzeugnutzungskenngröße etwa die zurükgelegte Wegstrecke, wird diese beispielsweise auf den Wert null gesetzt. Nachfolgend startet die Verriegelungssteuereinrichtung 30 die Erfassung der Fahrzeugnutzungskenngröße, Schritt 104.

Ergibt die Prüfung in Schritt 101, daß in der Verriegelungssteuereinrichtung 30 noch eine gültige Altfreigabeinformation vorhanden ist, schließt sich an Schritt 102 direkt Schritt 104 an. Ein Rücksetzen der Fahrzeugnutzungskenngrößen erfolgt dann nicht.

Im nachfolgenden Schritt 105 prüft die Verriegelungssteuereinrichtung 30, ob die erfaßte Fahrzeugnutzungskenngröße, beispielsweise die seit dem Zeitpunkt des Zugangs der letzten Neufreigabeinformation zurückgelegte Wegstrecke und/oder die seitdem aufgelaufene Betriebszeit, einen vorgegebenen Maximalwert überschreitet.

Der Maximalwert ist zweckmäßig auf die technische Ausführung des jeweiligen Fahrzeugs abgestimmt. Sinnvollerweise ist etwa der Maximalwert für die zurückgelegte Wegstrecke so gewählt, daß er etwas größer ist, als diejenige Wegstrecke, welche das jeweilige Fahrzeug mittels einer Tankfüllung unter günstigsten Bedingungen zurücklegen kann. In ähnlicher Weise entspricht der Maximalwert für die Betriebszeit zweckmäßig etwa der sich für eine volle Tankfüllung ergebenden Leerlaufbetriebsdauer. Alternativ zur festen Vorgabe können die Maximalwerte auch variabel vorgebbarsein, und der Verriegelungssteuereinrichtung 30 beispielsweise jeweils zusammen mit der Freigabeinformation über die Codekarte 40 zugeführt werden. Auf diese Weise läßt sich zum Beispiel bei Mietfahrzeugen die Nutzungsdauer auf einen vereinbarten Wert begrenzen.

Solange der Maximalwert nicht erreicht ist, wird die Erfassung der Fahrzeugnutzungskenngröße, Schritt 104, fortgesetzt. Jeweils nach Ablauf einer Zykluszeit, die beispielsweise 1 bis 60 Sekunden betragen kann, wird die Abfrage nach Schritt 105, anschließend gegebenenfalls Schritt 104, wiederholt.

Ergibt die Prüfung im Schritt 105, daß der maximale Fahrzeugnutzungskenngrößenwert erreicht wurde, löscht die Verriegelungssteuereinrichtung 30 die vorhandene Altfreigabeinformation und prüft anschließend, Schritt 102, ob ihr eine Neufreigabeinformation von der Codekarte 40 vorliegt. Trifft dies zu, werden anschließend die Schritte 103 fortfolgend wiederholt. Liegt eine Neufreigabeinformation im Schritt 102 nicht vor, schränkt die Verriegelungssteuereinrichtung 30 in Schritt 106 die Nutzbarkeit des Fahrzeuges ein. Hierzu verringert es beispielsweise die maximal mögliche Motordrehzahl oder begrenzt die Höchstgeschwindigkeit. Der eingeschränkte Betrieb wird dem Benutzer zeckmäßig akustisch oder optisch siganlisiert, etwa durch Blinken einer Fehlerlampe. Im folgenden Schritt 108 prüft die Verriegelungssteuereinrichtung 30, ob seit dem Feststellen des Fehlens einer gültigen Altfreigabeinformation in Schritt 102 eine vorbestimmte Überezeit verstrichen ist. Ist dies noch nicht der Fall, wiederholt sie Schritt 102 und prüft erneut, ob eine Neufreigabefunktion eingegangen ist. Ergibt die Prüfung im Schritt 108 schließlich, daß die vorgegebene Überzeit abgelaufen ist, sperrt die Verriegelungssteuereinrichtung 30 im Schritt 110 das Motorsteuergerät 31.

Eine Ausführungsform des Strukturellen Diebstahlschutzes nach der Erfindung zeigt Figur 3. Anstelle eines Kartenlesers 20 ist bei dieser Anordnung fahrzeugseitig eine Sende/Empfangseinrichtung 21 vorgesehen. Vorzugsweise ist die Sende/Empfangseinrichtung 21 eine auf ein vorhandenes Funknetz abgestimmte Sende/Empfangsantenne. Die weiteren Elemente der fahrzeugseitigen Anordnung entsprechen den bereits anhand der Anordnung nach Figur 1 beschriebenen. Als ortsfestes Element dient bei dieser Ausführungsform eine Sende/Empfangsstation 11 zur Abgabe von Funksignalen. Zweckmäßig handelt es sich bei den Sende/Empfangsstationen 11 um die stationären Sende/Empfangseinrichtungen eines vorhandenen Mobilfunknetzes 21.

Die Arbeitsweise der Ausführungsform entspricht weitestgehend der der Anordnung nach Figur 1, und kann gleichfalls anhand von Figur 2 beschrieben werden. Nach Initialisierung der Inbetriebnahme prüft die Verriegelungssteuereinrichtung 30 zunächst, ob eine gültige Altfreigabeinformation vorliegt, Schritt 101. Trifft dies zu, schließt sich unmittelbar die Erfassung der Fahrzeugnutzungskenngrößen, Schritt 104, an.

Ist dies nicht der Fall, fordert die Verriegelungssteuereinrichtung 30 über die Sende/Empfangseinrichtung 21 und das Funknetz 41 von einer Sende/Empfangsstation eine Neufreigabeinformation an. Es folgt eine Prüfung, ob eine Neufreigabeinformation eingegangen ist, Schritt 102. Ist dies der Fall, werden im Schritt 103 einen Altfreigabeinformation erzeugt und die Werte der erfaßten Fahrzeugnutzungskenngrößen auf ihre Startwerte zurückgesetzt. Erfaßte Kenngrößen sind zweckmäßig, wie bei der Anordnung nach Figur 1, zurückgelegte Wegstrecke und/oder Betriebsdauer seit Eingang der letzten vorhergehenden Neufreigabeinformation. Sodann schließen sich wiederum das Erfassen der Fahrzeugnutzungskenngrößen, Schritt 104, sowie die Prüfung, ob die erfaßten Kenngrößen vorgegebene Maximalwerte übersteigen, Schritt 105, an. Die vorgegebenen Maximalwerte sind dabei an die Frequenz angepaßt, mit der der Sende/Empfangseinrichtung 21 über das Funknetz 41 Neufreigabeinformationen zugehen. Sie kann einen beliebigen Wert zwischen einigen Sekunden und mehreren Stunden annehmen. Ist das Ergebnis der Prüfung im Schritt 105 negativ, wird wiederum Schritt 104 wiederholt. Ist das Ergebnis der Prüfung im Schritt 105 positiv, d.h. hat die erfaßte Fahrzeugnutzungskenngröße den vorgegebenen Grenzwert erreicht, wiederholt die Verriegelungssteuereinrichtung 30 Schritt 102 und prüft, ob eine Neufreigabeinformation eingegangen ist. Denkbar ist, daß die Verriegelungssteuereinrichtung 30 eine Neufreigabeinformation stets erst dann anfordert, wenn die erfaßte Fahrzeugnutzungskenngröße den vorgegebenen Maximalwert erreicht. In diesem Fall geht der Prüfung im Schritt 102 eine, nicht dargestellte, Anforderung eines neuen Freigabesignales voraus. Ergibt die Prüfung im Schritt 102, daß eine neue Freigabeinformation nicht vorliegt, reduziert die Verriegelungssteuereinrichtung 30 im Schritt 106 die Fahrzeugnutzbarkeit. Es folgt eine Prüfung, ob eine vorgegebene Überzeit, in welcher das Fahrzeug trotz Fehlens einer Freigabeinformation noch beschränkt nutzbar ist, abgelaufen ist, Schritt 108. Ist dies noch nicht der Fall, wird, Schritt 102, erneut geprüft, ob eine neue Freigabeinformation eingetroffen ist. Ergibt die Prüfung im Schritt 106, daß die Überzeit abgelaufen ist, sperrt die Verriegelungssteuereinrichtung 30 das Motorsteuergerät 31 und legt daurch das Fahrzeug still, Schritt 110. In jedem Fall erfolgt eine Freischaltung des Motorsteuergeräts nur dann wenn sich der Benutzer mit Hilfe der Legitimationseinrichtung (33) zusätzlich legitimiert hat.

Eine weitere Möglichkeit, die Anordnung gemäß Figur 3 zu betreiben, ist in Figur 4 veranschaulicht. Anstelle von Freigabeinformationen werden bei dieser Betriebsweise über das Funknetz 41 Informationen übertragen, welche es der Verriegelungssteuereinrichtung 30 gestatten, die aktuelle Fahrzeugposition zu bestimmen, Schritt 120. Die jeweils bestimmte Position untersucht die Verriegelungssteuereinrichtung 30 anschließend darauf, ob sie innerhalb eines vorbestimmten Aktionsbereiches liegt, Schritt 122.

Der Aktionsbereich liegt vor Inbetriebnahme des Fahrzeuges fest und ist in einem in der Verriegelungssteuereinrichtung vorhandenen Speicher abgelegt. Das Definieren des Aktionsbereiches erfolgt außerhalb des Fahrzeuges, zum Beispiel mittels eines Heimcomputers oder eines speziellen Programmiergerätes. Zur Übergabe der den Aktionbereich festlegenden Daten an die Verriegelungssteuereinrichtung 30 dient zweckmäßig wiederum ein Codekartensystem mit Codekarte 40 und Kartenleser 20, analog zur Anordnung nach Figur 1.

Die dazu eingesetzte Programmierstation ist durch einen vom Fahrzeughersteller festgelegten Code eindeutig dem Fahrzeug zugeordnet. Eine Programmierung kann nur durchgeführt werden, wenn der Fahrzeugcode und ein vom Benutzer bestimmter Code zueinanderpassen.

Ergibt die Prüfung im Schritt 122, daß die festgestellte Position innerhalb des vorgegebenen Aktionsbereiches liegt, wird, nach Ablauf einer geeigneten Zeitspanne, welche in beliebiger Weise zwischen einigen Sekunden und mehreren Stunden liegen kann, die Positionsbestimmung gemäß Schritt 120 wiederholt. Ergibt die Prüfung im Schritt 122, daß die festgestellte Position außerhalb des vorgegebenen Aktionsbereiches liegt, reduziert die Verriegelungssteuereinrichtung 30 im Schritt 124 die Fahrzeugnutzbarkeit. Dies kann beispielsweise wiederum durch Beschränkung der Motordrehzahl oder der Höchstgeschwindigkeit bewirkt werden. Nachfolgend prüft die Verriegelungssteuereinrichtung 30 im Schritt 126, ob die erfaßte Fahrzeugnutzungskenngröße einen vorgegebenen Maximalwert erreicht hat. Der Maximalwert gibt in diesem Fall dem Benutzer die Möglichkeit, das Fahrzeug bei versehentlichem Verlassen des zulässigen Aktionsbereiches wieder in den vorgegebenen Aktionsbereich zurückzuführen, entsprechend ist er festgelegt. Ist der Fahrzeugnutzungskenngrößenmaximalwert noch nicht erreicht, wird Schritt 120 wiederholt. Ergibt die Prüfung im Schritt 126, daß die erfaßte Fahrzeugnutzungskenngröße den Maximalwert erreicht hat, sperrt die Verriegelungssteuereinrichtung 30 wiederum das Motorsteuergerät 31, Schritt 128.

Eine detailliertere Darstellung der die Verriegelungsfunktionalität realisierenden Anordnungselemente zeigt Figur 5. Die Verriegelungssteuereinheit 30 ist dabei als Teil des Motorsteuergerätes 31 realisiert. Die vom, in Figur 5 nicht dargestellten, Kartenlese- oder Sende/Empfangsmodul kommende Übertragungsstrecke ist auf einen Empfänger 50 geführt. Von diesem führt ein Reset-Ausgang 60 auf ein erstes Integrationsglied 51 zur Erfassung der zurückgelegten Wegstrecke und ein zweites Integrationsglied 52 zur Erfassung der Betriebszeit. Zwei weitere Ausgänge 61, 62 zur Vorgabe einer maximalen Betriebszeit tₘₐₓ bzw. maximale Wegstrecke Sₘₐₓ führen jeweils auf einen Schwellwertregler 55, 56. Über einen gemeinsamen Ausgang 63 sind Integrationsglied 51 und Schwellwertregler 56 mit einem Kennfeldregler 54 verbunden. In gleicher Weise sind Integrationsglied 52 und Schwellwertregler 55 über einen gemeinsamen Ausgang 64 mit dem Kennfeldregler 54 verbunden. Über Ausgänge 65, 66 sind die Schwellwertregler 55 bzw. 56 mit einem Oderglied 57 verbunden. Dessen Ausgang steuert einen Schalter 58, welcher die Trennung einer Verbindung 67 zwischen Kennfeldregler 54 und einem nachgeschalteten Drehzahlbegrenzer 59 gestattet. Mit dem Integrationsglied 52 ist ferner über einen Eingang 68 ein Zeitzähler 53 zur Erfassung der Betriebszeit verbunden. In ähnlicher Weise sind dem zweiten Integrationsglied 51 über einen Eingang 69 die Impulse eines Tachogebers 32 zugeführt.

Die in Figur 5 wiedergegebene Anordnung arbeitet wie folgt: Hat sich ein Benutzer durch Eingabe eines richtigen Codes, beispielsweise über eine Tastatur 33, legitimiert, wird die dem Kartenleser 20 bzw. dem Sende/Empfangsmodul 21 zugeführte Freigabeinformation über die serielle Übertragungsstrecke 22 dem Empfänger 50 zugeführt. Dieser setzt die Informationsglieder 51, 52 auf ihre Startwerte zurück. Ferner übermittelt er den Schwellwertreglern 55, 56 die vorab programierten Grenzwerte für die Betriebsdauer t bzw. die Wegstrecke S. Während des Fahrzeugbetriebes summieren die Integrierglieder 51, 52 nun fortlaufend die vom Zeitzähler 53 bzw. Tachogeber 32 zugeführten Informationen bezüglich der Betriebszeit t bzw. der zurückgelegten Wegstrecke S auf. Die ermittelten Werte für die Betriebsdauer t bzw. die zurückgelegte Wegstrecke S werden dem Kennfeldregler 54 zugeführt, welcher ihnen eine Motorhöchstdrehzahl nₘₐₓ zuordnet und diese dem Drehzahlbegrenzer 59 übermittelt. Der Schalter 58 ist dabei zunächst geschlossen. Gleichzeitig werden die von den Integrationsgliedern 51, 52 ermittelten Fahrzeugnutzungskenngrößen t, S den Schwellwertreglern 55, 56 zugeführt. Dieser ordnet ihnen gemäß einer nicht linearen Regelfunktion die logischen Werte Null bis 1 zu. Dabei wird der Wert logisch Null zugeordnet, solange die jeweilige Fahrzeugnutzungskenngröße den vom Empfänger 50 vorgegebenen Grenzwert tₘₐₓ bzw. Sₘₐₓ noch nicht erreicht hat. Überschreiten die erfaßten Fahrzeugnutzungskennwerte t, S die vorgegebenen Grenzwerte tₘₐₓ, Sₘₐₓ, werden ihnen mit zunehmendem Überschreiten die Werte logisch Eins zugeordnet. Den die vorgegebenen Höchstwerte tₘₐₓ, Sₘₐₓ überschreitenden Fahrzeugnutzungskenngrößen t, S ordnet gleichzeitig der Kennfeldregler 54 eine zunehmend kleinere Motorhöchstdrehzahl nₘₐₓzu und übermittelt diese an den Drehzahlbegrenzer 59. Solange die Eingänge 65 und 66 am Oderglied 57 zusammen noch nicht den Wert logisch Eins ergeben, ist dadurch ein Fahrzeugbetrieb mit eingeschränkter Höchstdrehzahl nₘₐₓ möglich. Sobald die Summe der Eingänge 65 und 66 am Oderglied 57 allerdings den Wert Eins ergibt, wird der Schalter 58 betätigt. Dem Drehzahlbegrenzer 59 wird als Solldrehzahl nunmehr eine von dem Kennfeldregler 54 bestimmte Drehzahl zugeführt. Diese wird mit zunehmender Überschreitung der Höchstwerte tₘₐₓ, Sₘₐₓ kleiner, bis sie schließlich den Wert Null erreicht, woraufhin das Fahrzeug stillgesetzt wird. Geht, während die Integrationsglieder 51, 52 die zurückgelegte Wegstrecke S bzw. die Betriebszeit T summieren, im Empfänger 50 eine neue Freigabeinformation ein, werden die Integrationsglieder 51, 52 zurückgesetzt. Ein kontinuierlicher Betrieb der Anordnung nach Figur 5 ist demnach möglich, wenn regelmäßig, bevor die erfaßten Fahrzeugkenngrößen t, S die vorgegebenen Maximalwerte Sₘₐₓ, tₘₐₓ erreichen, eine neue Freigabeinformation eingeht.

Unter Beibehaltung des zugrundeliegenden Gedankens ist eine Vielzahl weiterer Ausgestaltungen der Erfindung möglich. Dies gilt sowohl für den strukturellen Aufbau der verwendeten Sicherungsanordnungen, als auch insbesondere für die Betriebsweisen der Anordnung.

## Patentansprüche

1. Struktureller Diebstahlschutz für Kraftfahrzeuge mit
- einer im Fahrzeug angeordneten Verriegelungssteuereinrichtung (30) zur Freischaltung eines Motorsteuergerätes (31),
- einer mit der Verriegelungssteuereinrichtung verbundenen Sende-Empfangseinrichtung (21),
- einer mit der Verriegelungssteuereinrichtung (30) verbundenen Einrichtung (32) zur Erfassung einer Fahrzeugnutzungskenngröße (t, S),
- sowie mit mehreren ortsfesten, nicht dem Fahrzeug zugehörigen Sende-Empfangsstationen (11), wobei
die Verriegelungssteuereinrichtung (30) über die fahrzeugeigene Sende-Empfangseinrichtung (21) von einer ortsfesten Sende-Empfangsstation (11) jeweils die Zusendung einer Neufreigabeinformation anfordert, wenn die erfaßte Fahrzeugnutzungskenngröße (t, S) einen vorgegebenen Grenzwert erreicht, und sie die Nutzbarkeit des Fahrzeuges beschränkt, wenn eine Neufreigabeinformation nicht eingeht, und
eine Freischaltung des Motorsteuergerätes (31) nur erfolgt, wenn sich der Benutzer mit Hilfe einer Legitimationseinrichtung (33) zusätzlich legitimiert hat, die Freigabeinformation Maximalwerte der Fahrzeugnutzungskenngrößen zur Definition eines Aktionsbereiches beinhaltet, die erfaßte Fahrzeugnutzungskenngröße die aktuelle Position des Fahrzeuges ist, die Freigabeinformation Angaben über den Aktionsbereich enthält, und die Verriegelungssteuereinrichtung (30) das Motorsteuergerät (31) nur freischaltet, wenn die aktuelle Position innerhalb des Aktionsbereiches liegt.

2. Diebstahlsicherungsanordnung nach Anspruch 1, **dadurch gekennzeichnet, daß** die Freischaltung jeweils beschränkt ist auf einen Betrieb innerhalb eines Aktionsbereiches, der durch vorgegebene Maximalwerte der Fahrzeugnutzungskenngrößen (tₘₐₓ, sₘₐₓ) definiert ist.

3. Diebstahlsicherungsanordnung nach Anspruch 1, **dadurch gekennzeichnet, daß** die erfaßte Fahrzeugnutzungskenngröße die Betriebsdauer (t) und/oder die zurückgelegte Wegstrecke (S) ist.

4. Diebstahlsicherungsansordnung nach Anspruch 1, **dadurch gekennzeichnet, daß** die Verriegelungssteuereinrichtung (30) die Funktionsbereitschaft des Fahrzeuges schrittweise einschränkt, wenn die erfaßten Fahrzeugnutzungskenngrößen außerhalb des vorgeggebenen Aktionsbereiches liegen.

## Claims

1. Structural anti-theft device for motor vehicles having
- a blocking control device (30) which is arranged in the vehicle and has the purpose of enabling an engine control unit (31),
- a transceiver (21) which is connected to the blocking control device,
- a device (32) which is connected to the blocking control device (30) and has the purpose of sensing a vehicle-use characteristic variable (t, s),
- and having a plurality of fixed transmitter/receiver stations (11) which are not associated with the vehicle,
the blocking control device (30) requesting, from a fixed transceiver station (11) via the vehicle's own transceiver device (21), that in each case new release information be transmitted to it if the sensed vehicle-use characteristic variable (t, s) reaches a predefined limiting value, and said blocking control device (30) restricts the usability of the vehicle if new release information is not received, and the engine control unit (31) is enabled only if the user has additionally received authorization by means of an authorization device (33), the release information comprises maximum values of the vehicle-use characteristic variables for defining an action range, the sensed vehicle-use characteristic variable is the current position of the vehicle, and the release information includes information relating to the action range.

2. Anti-theft arrangement according to Claim 1, **characterized in that** the enabling is restricted in each case to operation within an action range which is defined by predefined maximum values of the vehicle-use characteristic variables (tₘₐₓ, sₘₐₓ).

3. Anti-theft arrangement according to Claim 1, **characterized in that** the sensed vehicle-use characteristic variable is the operating period (t) and/or the distance (s) travelled.

4. Anti-theft control arrangement according to Claim 1, **characterized in that** the blocking control device (30) incrementally restricts the operational capability of the vehicle if the sensed vehicle-use characteristic variables lie outside the predefined action range.

## Revendications

1. Système antivol structurel pour des véhicules automobiles, comprenant :
- une installation de commande de verrouillage (30) installée dans le véhicule pour libérer un appareil de commande de moteur (31),
- une installation d'émission/réception (21) reliée à l'installation de commande de verrouillage,
- une installation (32) reliée à l'installation de commande de verrouillage (30) pour saisir une grandeur caractéristique d'utilisation du véhicule (t, S),
- ainsi que plusieurs postes d'émission/réception (11) ne faisant pas partie du véhicule,
système dans lequel :
l'installation de commande de verrouillage (30) demande par l'intermédiaire de l'installation d'émission/réception (21) du véhicule, à partir d'un poste fixe d'émission/réception (11), l'envoi respectif d'une nouvelle information de libération lorsque la grandeur caractéristique d'utilisation du véhicule, saisie, (t, S) dépasse une valeur limite prédéterminée, et limite l'utilisation du véhicule si une nouvelle information de libération du véhicule n'est pas fournie,
l'appareil de commande du moteur (31) n'est libéré que si l'utilisateur a en outre été légitimé par une installation de légitimation (33),
l'information de libération contient les valeurs maximales des grandeurs caractéristiques d'utilisation servant à définir une zone d'action,
la grandeur caractéristique d'utilisation du véhicule, saisie, est la position actuelle du véhicule, et l'information de libération contient des indications relatives à la zone d'action, et
l'installation de commande de verrouillage (30) ne libère l'appareil de commande de moteur (31) que si la position actuelle se situe dans la zone d'action.

2. Système antivol structurel selon la revendication 1,
**caractérisé en ce que**
la libération est chaque fois limitée à un fonctionnement dans une zone d'action définie par les valeurs maximales prédéterminées des grandeurs caractéristiques d'utilisation du véhicule (tₘₐₓ, Sₘₐₓ).

3. Système antivol structurel selon la revendication 1,
**caractérisé en ce que**
les grandeurs caractéristiques d'utilisation du véhicule, saisies, sont la durée de fonctionnement (t) et/ou le trajet parcouru (S).

4. Système antivol structurel selon la revendication 1,
**caractérisé en ce que**
l'installation de commande de verrouillage (30) limite par étapes l'aptitude au fonctionnement du véhicule si les grandeurs caractéristiques d'utilisation du véhicule, saisies, se situent en dehors de la zone d'action prédéterminée.
